# EUROPEAN PATENT SPECIFICATION

(11) **EP 2 928 979 B1**
(45) Date of publication and mention of the grant of the patent: **20.02.2019**
(21) Application number: 12889432.6
(22) Date of filing: 04.12.2012
(51) Int. Cl.: C09K 5/04

(54) **LOW GWP HEAT TRANSFER COMPOSITIONS**
WÄRMEÜBERTRAGUNGSZUSAMMENSETZUNGEN MIT GERINGEM GWP-WERT
COMPOSITIONS CALOPORTEUSES DE FAIBLE POTENTIEL DE RÉCHAUFFEMENT DU GLOBE (PRG)

(43) Date of publication of application: 14.10.2015
(73) Proprietor: Honeywell International Inc., Morris Plains, NJ 07950 (US)
(72) Inventor: SEETON, Christopher, Morristown, New Jersey 07962-2245 (US); LIU, Jun, Shanghai 201203 (CN); NIU, Yongming, Shanghai 201203 (CN); HULSE, Ryan, Morristown, New Jersey 07962-2245 (US)
(74) Representative: Crooks, Elizabeth Caroline
(86) International application number: PCT/CN2012/085802
(87) International publication number: WO 2014/085973

(56) References cited:
- EP-A2- 2 149 592
- WO-A2-2008/009923
- CN-A- 101 014 680
- CN-A- 101 297 016
- US-A1- 2008 075 673
- US-A1- 2011 204 279

## Description

### FIELD OF THE INVENTION

This invention relates to compositions, methods and systems having utility particularly in refrigeration applications, and in particular aspects to refrigerant compositions useful in systems that typically utilize the refrigerant R-410A and/or R-32 for heating and cooling applications.

### BACKGROUND

Fluorocarbon based fluids have found widespread use in many commercial and industrial applications, including as the working fluid in systems such as air conditioning, heat pump and refrigeration systems, among other uses such as aerosol propellants, as blowing agents, and as gaseous dielectrics.

Heat transfer fluids, to be commercially viable, must satisfy certain very specific and in certain cases very stringent combinations of physical, chemical and economic properties. Moreover, there are many different types of heat transfer systems and heat transfer equipment, and in many cases it is important that the heat transfer fluid used in such systems posses a particular combination of properties that match the needs of the individual system. For example, systems based on the vapor compression cycle usually involve the phase change of the refrigerant from the liquid to the vapor phase through heat absorption at a relatively low pressure and compressing the vapor to a relatively elevated pressure, condensing the vapor to the liquid phase through heat removal at this relatively elevated pressure and temperature, and then reducing the pressure to start the cycle over again.

Certain fluorocarbons, for example, have been a preferred component in many heat exchange fluids, such as refrigerants, for many years in many applications. Fluoroalkanes, such as chlorofluoromethanes and chlorofluoroethanes, have gained widespread use as refrigerants in applications including air conditioning and heat pump applications owing to their unique combination of chemical and physical properties, such as heat capacity, flammability, stability under the conditions of operation, and miscibility with the lubricant (if any) used in the system. Moreover, many of the refrigerants commonly utilized in vapor compression systems are either single components fluids, or zeotropic, azeotropic mixtures.

Concern has increased in recent years about potential damage to the earth's atmosphere and climate, and certain chlorine-based compounds have been identified as particularly problematic in this regard. The use of chlorine-containing compositions (such as chlorofluorocarbons (CFCs), hydrochlorofluorocarbons (HCFCs) and the like) as refrigerants in air-conditioning and refrigeration systems has become disfavored because of the ozone-depleting properties associated with many of such compounds. There has thus been an increasing need for new fluorocarbon and hydro fluorocarbon compounds that offer alternatives for refrigeration and heat pump applications. By way of example, in certain aspects, it has become desirable to retrofit chlorine-containing refrigeration systems by replacing chlorine-containing refrigerants with non-chlorine-containing refrigerant compounds that will not deplete the ozone layer, such as hydrofluorocarbons (HFCs).

Another concern surrounding many existing refrigerants is the tendency of many such products to cause global warming. This characteristic is commonly measured as global warming potential (GWP). The GWP of a compound is a measure of the potential contribution to the green house effect of the chemical against a known reference molecule, namely, CO₂ which has a GWP = 1. For example, the following known refrigerants possess the following Global Warming Potentials:

| REFRIGERANT | GWP |
|---|---|
| R410A | 2088 |
| R-507 | 3985 |
| R404A | 3922 |
| R407C | 1774 |

While each of the above-noted refrigerants has proven effective in many respects, these materials are become increasingly less preferred since it is frequently undesirable to use materials having GWPs greater than about 1000. A need exists, therefore, for substitutes for these and other existing refrigerants having undesirable GWPs.

There has thus been an increasing need for new fluorocarbon and hydro fluorocarbon compounds and compositions that are attractive alternatives to the compositions heretofore used in these and other applications. For example, it has become desirable to retrofit certain systems, including chlorine-containing and certain HFC-containing refrigeration systems by replacing the existing refrigerants with refrigerant compositions that will not deplete the ozone layer, will not cause unwanted levels of global worming, and at the same time will satisfy all of the other stringent requirements of such systems for the materials used as the heat transfer material.

With respect to performance properties, the present applicants have come to appreciate that that any potential substitute refrigerant must also possess those properties present in many of the most widely used fluids, such as excellent heat transfer properties, chemical stability, low- or no-toxicity, low or non-flammability and lubricant compatibility, among others.

With regard to efficiency in use, it is important to note that a loss in refrigerant thermodynamic performance or energy efficiency may have secondary environmental impacts through increased fossil fuel usage arising from an increased demand for electrical energy.

Furthermore, it is generally considered desirable for refrigerant substitutes to be effective without major engineering changes to conventional vapor compression technology currently used with existing refrigerants, such as CFC-containing refrigerants.

Flammability is another important property for many applications. That is, it is considered either important or essential in many applications, including particularly in heat transfer applications, to use compositions which are non-flammable or of relatively low flammability. As used herein, the term "nonflammable" refers to compounds or compositions which are determined to be nonflammable as determined in accordance with ASTM standard E-681, dated 2002, which is incorporated herein by reference. Unfortunately, many HFCs and HFOs which might otherwise be desirable for used in refrigerant compositions are flammable. For example, the fluoroalkane difluoroethane (HFC-152a) and the fluoroalkene 1,1,1-trifluorpropene (HFO-1243zf) are each flammable and therefore not viable for use alone in many applications.

US 2011/204279 describes compositions comprising a fluorinated olefin and at least one additional compound, including compositions of HFO-1234yz, HFC-32 and R600a.

US 2008/075673 describes azeotrope-like compositions comprising HFO-1234ze and at least one compound selected from propane, isobutane, n-butane, 2-methylbutane and combinations thereof.

EP2149592 describes heat transfer compositions comprising (a) a first component comprising R32, (b) a second component selected from C2-C5 multifluorinated olefins and (c) optionally at least one third component selected from C2-C3 fluorinated alkanes, CF₃I, and combinations of these.

Applicants have thus come to appreciate a need for compositions, and particularly heat transfer compositions, that are potentially useful in numerous applications, including vapor compression heating and cooling systems and methods, while avoiding one or more of the disadvantages noted above.

### SUMMARY

In certain aspects, the present invention relates to compositions, methods, uses and systems which comprise or utilize a multi-component mixture comprising: (a) from about 60% to about 70% by weight of HFC-32; (b) from about 20% to less than about 40% by weight of HFO-1234ze; and (c) from greater than about 0% to about 10% by weight of n-butane,
isobutane, and combinations thereof, provided that the amount of component (c) is effective to improve one or more of the composition's glide; heating capacity, cooling capacity, heating efficiency, cooling efficiency; and/or discharge temperature, as compared to compositions lacking component (c).

In alternative aspects, the composition includes (a) from about 63% to about 69% by weight of HFC-32; (b) from about 25% to less than about 37% by weight of HFO-1234ze; and (c) from greater than about 0% to about 6% by weight of n-butane, isobutane, and combinations thereof, provided, again, that the amount of component (c) is effective to improve one or more of the composition's glide; heating capacity, cooling capacity, heating efficiency, cooling efficiency; and/or discharge temperature, as compared to compositions lacking component (c).

The term HFO-1234ze is used herein generically to refer to 1,1,1,3-tetrafluoropropene, independent of whether it is the cis- or trans- form. The terms "cisHFO-1234ze" and "transHFO-1234ze" are used herein to describe the cis- and trans- forms of 1,1,1,3-tetrafluoropropene respectively. The term "HFO-1234ze" therefore includes within its scope cisHFO-1234ze, transHFO-1234ze, and all combinations and mixtures of these. In certain preferred aspects, the HFO-1234ze comprises, consists essentially of, or consists of transHFO-1234ze.

In further aspects of the foregoing, components (a), (b), and/or (c) may be provided in effective amounts to form an azeotrope or azeotrope-like compositions. That is in certain aspects, butane or isobutane and HFO-1234ze are provided in amounts effective to from an azeotrope or azeotrope-like composition. In further aspects, butane or isobutane and HFC-32 are provided in amounts effective to from an azeotrope or azeotrope-like composition, and in even further aspects, butane or isobutane, HFC-32 and HFO-1234ze are provided in amounts effective to from an azeotrope or azeotrope-like composition

The present invention provides also methods and systems which utilize the compositions of the present invention, including methods and systems for transferring heat, and methods and systems for replacing an existing heat transfer fluid in an existing heat transfer system, and methods of selecting a heat transfer fluid in accordance with the present invention to replace one or more existing heat transfer fluids. While in certain embodiments the compositions, methods, and systems of the present invention can be used to replace any known heat transfer fluid, in further, and in some cases preferred embodiments, the compositions of the present application may be used as a replacement for R-410A and/or R-32.

Refrigeration systems contemplated in accordance with the present invention include, but are not limited to, automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, heat pump systems, and combinations of two or more of these. In certain preferred embodiments, the refrigeration systems include stationary refrigeration systems and heat pump systems or any system where R-410A and/or R-32 is used as the refrigerant.

### BRIEF DESCRIPTION OF THE FIGURES

FIG. 1 illustrates the change to a composition of R32/R1234ze/Butane as a Refrigerant Vapor Phase Leak Progresses.
FIG 2 illustrates the change to a composition of R32/R1234ze/Isobutane as a Refrigerant Vapor Phase Leak Progresses
FIG.3 illustrates the burning velocity of R32/R1234ze/Butane (67/28/5).

### DETAILED DESCRIPTION OF PREFERRED EMBODIMENTS

R-410A is commonly used in air conditioning systems, particularly stationary air conditioning units, and heat pump systems. It has an estimated Global Warming Potential (GWP) of 2088, which is much higher than is desired or required. Applicants have found that the compositions of the present invention satisfy in an exceptional and unexpected way the need for new compositions for such applications, particularly though not exclusively air conditioning and heat pump systems, having improved performance with respect to environmental impact while at the same time providing other important performance characteristics, such as, but not limited to, capacity, efficiency, flammability and toxicity. In preferred embodiments the present compositions provide alternatives and/or replacements for refrigerants currently used in such applications, particularly and preferably R-410A, that at once have lower GWP values and have a close match in heating and cooling capacity to R-410A in such systems.

### HEAT TRANSFER COMPOSITIONS

The compositions of the present invention arc generally adaptable for use in heat transfer applications, that is, as a heating and/or cooling medium, but are particularly well adapted for use, as mentioned above, in AC and heat pump systems that have hereto for used R-410A and/or R-32. Applicants have found that use of the components of the present invention within the stated ranges is important to achieve the important but difficult to achieve combinations of properties exhibited by the present compositions, particularly in the preferred systems and methods.

In certain embodiments, the HFC-32 is present in the compositions of the invention in an amount of from about 60 wt. % to about 70 wt. % by weight of the compositions. In certain preferred embodiments, the HFC-32 is present in the compositions of the invention in an amount of from about 63 wt. % to about 69 wt. % by weight.

In further embodiments, the HFO-1234ze is present in the compositions in amounts of from about 20 wt. % to about or less than about 40 wt.% by weight. In further embodiments, this component is provided in an amount from about 25 wt. % to about or less than about 37 wt.% by weight. In certain embodiments, the second component comprises, consists essentially of, or consists of transHFO-1234ze.

In certain embodiments, the compositions of the invention include at least n-butane, in an amount from greater than about 0 wt. % to about 10 wt. %. In further embodiments, n-butane is provided in an amount from greater than about 0 wt. % to about 6 wt. %. In further embodiments, the compositions of the present invention may include between, about 1% to about 8% by weight of n-butane; from about 1% to about 6% by weight of n-butane; from about 2% to about 8% by weight of n-butane; from about 2% to about 6% by weight of n-butane; from about 3% to about 8% by weight of n-butane; from about 3% to about 6% by weight of n-butane; from about 4% to about 8% by weight of n-butane; from about 4% to about 6% by weight of n-butane; or about 5% by weight of n-butane.

In even further embodiments, the compositions of the invention include at least isobutane, in an amount from greater than about 0 wt. % to about 10 wt. %. In further embodiments, isobutane is provided in an amount from greater than about 0 wt. % to about 6 wt. %. In further embodiments, the compositions of the present invention may include from about 1% to about 6% by weight of isobutane; from about 2% to about 6% by weight of isobutane; from about 3% to about 6% by weight of isobutane; from about 4% to about 6% by weight of isobutane; or about 5% by weight of isobutane.

In further aspects, the amounts of two or more of HFO-1234ze (particularly transHFO-1234ze), HFC-32, and a butane (include either isobutane or n-butane) are each provided in the composition in amounts effective to form an azeotrope or azeotrope-like composition. As used herein, the term "azeotrope-like" is intended in its broad sense to include both compositions that are strictly azeotropic and compositions that behave like azeotropic mixtures. From fundamental principles, the thermodynamic state of a fluid is defined by pressure, temperature, liquid composition, and vapor composition. An azeotropic mixture is a system of two or more components in which the liquid composition and vapor composition are equal at the stated pressure and temperature. In practice, this means that the components of an azeotropic mixture are constant-boiling and cannot be separated during a phase change.

Azeotrope-like compositions are constant boiling or essentially constant boiling. In other words, for azeotrope-like compositions, the composition of the vapor formed during boiling or evaporation is identical, or substantially identical, to the original liquid composition. Thus, with boiling or evaporation, the liquid composition changes, if at all, only to a minimal or negligible extent. This is to be contrasted with non-azeotrope-like compositions in which, during boiling or evaporation, the liquid composition changes to a substantial degree.

It follows from this that another characteristic of azeotrope-like compositions is that there is a range of compositions containing the same components in varying proportions that are azeotrope-like or constant boiling. All such compositions are intended to be covered by the terms "azeotrope-like" and "constant boiling." As an example, it is well known that at differing pressures, the composition of a given azeotrope will vary at least slightly, as does the boiling point of the composition. Thus, an azeotrope of A and B represents a unique type of relationship, but with a variable composition depending on temperature and/or pressure. It follows that, for azeotrope-like compositions, there is a range of compositions containing the same components in varying proportions that are azeotrope-like. All such compositions are intended to be covered by the term azeotrope-like as used herein.

The term "effective amounts" as used herein with respect to azeotrope-like and azeotropic compositions refers to the amount of each component which upon combination with the other component, results in the formation of an azeotrope-like composition of the present invention. With respect to compositions which are not necessarily azeotrope-like compositions, the term "effective amounts" means those amounts which will achieve the desired properties for the particular application.

In certain aspects of the invention, Applicants have surprisingly and unexpectedly found that the inclusion of n-butane and/or isobutane in a 1234/32-based composition decreases the resulting glide; improves heating capacity and efficiency; improves cooling capacity and efficiency and/or improves the discharge temperature in one or both a heating or cooling application (particularly in extreme operating conditions). As used herein, "glide" refers to the difference between the starting and ending temperatures of a phase-change process by a refrigerant within a refrigerating system. An increase in glide typically forces the system to work at lower suction pressures, which results in a decrease in performance. Applicants demonstrate herein, however, that the addition of n-butane and/or isobutane to compositions including HFO-1234 and HFC-32 surprisingly and unexpectedly decrease composition glide, thus improving system capacity, efficiency and/or discharge temperature. Without intending to be bound by theory, it is believed that these features are provided because the amounts of components (a)-(c) are effective to form one or more an azeotrope or azeotrope-like compositions, particularly, though not exclusively, one or more of the following azeotrope or azeotrope-like compositions: HFC-32 and n-butane; HFC-32 and isobutane; HFO-1234ze and n-butane; and HFO-1234ze and isobutane.

The compositions of the present invention are also advantageous as having low GWP. By way of non-limiting example, the following Table A illustrates the substantial GWP superiority of certain compositions of the present invention, which are described in parenthesis in terms of weight fraction of each component, in comparison to the GWP of R-410A, which has a GWP of 2088.

**TABLE A**

| Name | Composition | GWP | GWP %R410A |
|---|---|---|---|
| 410A | R32/R125 (0.50/0.50) | 2088 | |
| A | R32/1234ze(E)/Butane (0.68/0.27/0.05) | 459 | 22% |
| B | R32/1234ze(E)/Isobutane (0.68/0.27/0.05) | 461 | 22% |

The compositions of the present invention may include other components for the purpose of enhancing or providing certain functionality to the composition, or in some cases to reduce the cost of the composition. For example, refrigerant compositions according to the present invention, especially those used in vapor compression systems, include a lubricant, generally in amounts of from about 30 to about 50 percent by weight of the composition, and in some case potentially in amount greater than about 50 percent and other cases in amounts as low as about 5 percent.

Commonly used refrigeration lubricants such as Polyol Esters (POEs) and Poly Vinyl Ethers (PVEs), PAG oils, mineral oils, alkybenezenes, polyalphaolefins (PAOs) and silicone oils that are used in refrigeration machinery with hydrofluorocarbon (HFC) refrigerants may be used with the refrigerant compositions of the present invention. Commercially available esters include neopentyl glycol dipelargonate, which is available as Emery 2917 (registered trademark) and Hatcol 2370 (registered trademark). Other useful esters include phosphate esters, dibasic acid esters, and fluoroesters. Preferred lubricants include POEs and PVEs. Of course, different mixtures of different types of lubricants may be used.

### HEAT TRANSFER METHODS AND SYSTEMS

The present methods, systems and compositions are thus adaptable for use in connection with a wide variety of heat transfer systems in general and refrigeration systems in particular, such as air-conditioning (including both stationary and mobile air conditioning systems), refrigeration, heat-pump systems, and the like. Generally speaking, such refrigeration systems contemplated in accordance with the present invention include, but are not limited to, automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, heat pump systems, and combinations of two or more of these.

In certain preferred embodiments, the compositions of the present invention are used in refrigeration systems originally designed for use with an HCFC refrigerant, such as, for example, R-410A and/or R-32. Such refrigeration systems may include, but are not limited to, stationary refrigeration systems and heat pump systems or any system where R-410A and/or R-32 is used as the refrigerant.

The preferred compositions of the present invention tend to exhibit many of the desirable characteristics of R-410A and/or R-32 but have a GWP that is substantially lower than that of R-410A and/or R-32 while at the same time having a capacity that is substantially similar to or substantially matches, and preferably is as high as or higher than R-410A and/or R-32. In particular, applicants have recognized that certain preferred embodiments of the present compositions tend to exhibit relatively low global warming potentials ("GWPs"), preferably less than about 1500, preferably not greater than 1000, more preferably not greater than about 700, and more preferably not greater than about 500. Applicants have also surprisingly and unexpectedly recognized that such compositions having significantly reduced flammability and hazard values.

It is contemplated that in certain embodiments the present invention provides retrofitting methods which comprise replacing the neat transfer fluid (such as a refrigerant) in an existing system with a composition of the present invention, without substantial modification of the system. In certain preferred embodiments the replacement step is a drop-in replacement in the sense that no substantial redesign of the system is required and no major item of equipment needs to be replaced in order to accommodate the composition of the present invention as the heat transfer fluid. In certain preferred embodiments, the methods comprise a drop-in replacement in which the capacity of the system is at least about 70%, preferably at least about 85%, even more preferably at least about 90%, and even more preferably at least about 95% of the system capacity prior to replacement, and preferably not greater than about 130%, even more preferably less than about 115%, even more preferably less than about 110%, and even more preferably less than about 105%. In certain preferred embodiments, the methods comprise a drop-in replacement in which the suction pressure and/or the discharge pressure of the system, and even more preferably both, is/are at least about 70%, more preferably at least about 90% and even more preferably at least about 95% of the suction pressure and/or the discharge pressure prior to replacement, and preferably not greater than about 130%, even more preferably less than about 115, even more preferably less than about 110%, and even more preferably less than about 105%. In certain preferred embodiments, the methods comprise a drop-in replacement in which the mass flow of the system is at least about 80%, even more preferably at least 90%, and even more preferably at least 95% of the mass flow prior to replacement, and preferably not greater than about 130%, even more preferably less than about 115, even more preferably less than about 110%, and even more preferably less than about 105%.

In certain other preferred embodiments, the refrigeration compositions of the present invention may be used in refrigeration systems containing a lubricant used conventionally with R-410A and/or R-32, such as polyolester oils, and the like, or may be used with other lubricants traditionally used with HFC refrigerants, as discussed in greater detail above, including, but not limited to, Poly Vinyl Ethers (PVEs), PAG oils, mineral oil, alkybenezenes, polyalphaolefins (PAOs) and silicone oils. As used herein the term "refrigeration system" refers generally to any system or apparatus, or any part or portion of such a system or apparatus, which employs a refrigerant to provide heating or cooling. Such air refrigeration systems include, for example, air conditioners, electric refrigerators, chillers, or any of the systems identified herein or otherwise known in the art.

### EXAMPLES

### EXAMPLE 1 - Heat Pump Performance of R32/HFO-1234ze(E)/Butane blends

A representative air-to-air reversible heat pump designed for R410A was tested. This ducted unit was tested in Honeywell's Buffalo, New York application laboratory. The ducted unit is a 3-ton (10.5 kW cooling capacity) 13 SEER (3.8 cooling seasonal performance factor, SPF) with a heating capacity of 10.1 kW and an HSPF of 8.5 (rated heating SPF of ∼2.5), equipped with a scroll compressor. This system has tube-and-fin heat exchangers, reversing valves and thermostatic expansion valves for each operating mode. Due to the different pressures and densities of the refrigerants tested, some of the tests required the use of Electronic Expansion Valves (EEV) to reproduce the same degrees of superheat observed with the original refrigerants.

Tests shown in tables 1 and 2 were performed using standard [AHRI, 2008] operating conditions. All tests were performed inside environmental chambers equipped with instrumentation to measure both air-side and refrigerant-side parameters. Refrigerant flow was measured using a coriolis flow meter while air flow and capacity was measured using an air-enthalpy tunnel designed according to industry standards [ASHRAE, 1992]. All primary measurement sensors were calibrated to ±0.25°C for temperatures and ±0.25 psi for pressure. Experimental uncertainties for capacity and efficiency were on average ±5%. Capacity values represent the air-side measurements, which were carefully calibrated using the reference fluid (R-410A). The developmental blend, HDR-90 (R32/R1234ze/butane: 27/68/5) was tested in this heat pump in both cooling and heating modes along with the baseline refrigerant R-410A.

**Table 1 Standard Operating Conditions in Cooling Mode**

| Operating Conditions (Cooling Mode) | | | | |
|---|---|---|---|---|
| Test Condition | Indoor Ambient | | Outdoor Ambient | |
| | DB(°C) | WB(°C) | DB(°C) | WB(°C) |
| AHRI Std. A | 26.7 | 19 | 35 | 24 |
| AHRI Std. B | 26.7 | 19 | 27.8 | 18 |
| AHRI Std. MOC | 26.7 | 19 | 46.1 | 24 |

**Table 2 Standard Operating Conditions in Heating Mode**

| Operating Conditions (Heating Mode) | | | | |
|---|---|---|---|---|
| Test Condition | Indoor Ambient | | Outdoor Ambient | |
| | DB(°C) | WB(°C) | DB(°C) | WB(°C) |
| AHRI Std. H1 | 21.1 | 15.6 | 8.3 | 6.1 |
| AHRI Std. H3 | 21.1 | 15.6 | -8.3 | -9.4 |

**Table 3 Capacity Evaluations**

| | Characteristics | | | Capacity in Heating Mode | | Capacity in Cooling Mode |
|---|---|---|---|---|---|---|
| Refrigerant | Comp | GWP | Glide Ev | Rating (H1) | Low Temperature (H3) | Rating (A) |
| R410A | R32/R125(50/50) | 2088 | | 100% | 100% | 100% |
| R32 | R32 (100) | 675 | 0 | 105% | 102% | 108% |
| HDR-89 | R32/1234ze (68/32) | 459 | 4.4 | 93% | 90% | 95% |
| HDR-89 (*) | R32/1234ze (68/32) | 459 | 4.4 | 101% | 98% | 101% |
| HDR-90 | R32/1234ze/Butane (68/27/5) | 459 | 4.2 | 97% | 92% | 97% |
| HDR-90(*) | R32/1234ze/Butane (68/27/5) | 459 | 4.2 | 103% | 103% | 104% |

In tables 3, 4 and 5 refrigerants marked with an (*) represent testing using larger displacement compressor (11%). Lower amounts of R32 increase glide, which affects performance especially in heating mode when operating low temperature condition (H3). This is clearly seen in the capacity of HDR-89 which is 90% at H3 condition.

When adding butane, one would expect the capacity to be lower because we are adding a lower capacity component into the mixture. We also expect the glide to increase because of the addition of a lower pressure component in the mixture. Instead, we observed an increase in capacity in all operating conditions (2% to 5%), and a slight decline of the glide.

The benefit of adding butane is also shown after full capacity recovery at standard operating conditions (A and H1) without any performance penalty.

**Table 4 - Efficiency**

| | Characteristics | | | Efficiency in Heating Mode | Efficiency in Cooling Mode |
|---|---|---|---|---|---|
| Refrigerant | Comp | GWP | Glide Ev | Rating (H1) | Rating (B) |
| R410A | R32/R125(50/50) | 2088 | | 100% | 100% |
| R32 | R32 (100) | 675 | 0 | 100% | 101% |
| HDR-89 | R32/1234ze (68/32) | 459 | 4.4 | 103% | 103% |
| HDR-89 (*) | R32/1234ze (68/32) | 459 | 4.4 | 100% | 100% |
| HDR-90 | R32/1234ze/Butane (68/27/5) | 459 | 4.2 | 103% | 102% |
| HDR-90(*) | R32/1234ze/Butane (68/27/5) | 459 | 4.2 | 101% | 99% |

All refrigerants maintain efficiency after capacity recovery

**Table 5 Reliability at extreme operating conditions (AHRI MOC)**

| | Characteristics | | | Discharge Temperature (Deg C) |
|---|---|---|---|---|
| Refrigerant | Comp | GWP | Glide Ev | Rating (H1) |
| R410A | R32/R125(50/50) | 2088 | | 95.5 |
| R32 | R32 (100) | 675 | 0 | 119.4 |
| HDR-89 | R32/1234ze (68/32) | 459 | 4.4 | 107.7 |
| HDR-89 (*) | R32/1234ze (68/32) | 459 | 4.4 | 112.2 |
| HDR-90 | R32/1234ze/Butane (68/27/5) | 459 | 4.2 | 106.1 |
| HDR-90(*) | R32/1234ze/Butane (68/27/5) | 459 | 4.2 | 108.3 |

The AHRI MOC condition tests the equipment at extreme ambient temperatures to verify that all parameters do not exceed the design limits for the equipment. One of the important parameters is the discharge temperature, which should lower than 115 deg C if the current compressor technologies are used. Table 5 shows clearly that compositions containing lower amount of R32 (example: HDR90 with 68% ±2%) maintain this parameter inside the acceptable range.

### EXAMPLE 2 - Heat Pump Performance of R32/HFO-1234ze(E)/Isobutane blends

### A. Cooling Mode

Below, in Table 6, data is reported for an example heat pump system working in cooling mode, the condenser temperature is set to 45.0°C, which generally corresponds to an outdoor temperature of about 35.0°C. The degree of sub-cooling at the expansion device inlet is set to 5.55°C. The evaporating temperature is set to 7.0°C, which corresponds to an Indoor ambient temperature of about 20.0°C. The degree of superheat at evaporator outlet is set to 5.55°C. Compressor efficiency is set to 70%, and the volumetric efficiency is set to 100%. The pressure drop and heat transfer in the connecting lines (suction and liquid lines) are considered negligible, and heat leakage through the compressor shell is ignored. Several operating parameters are determined for the compositions identified above in accordance with the present invention, and these operating parameters are reported below, based upon R410A having a COP value of 1.00 and a capacity value of 1.00.

**Table 6**

| Fluid | GWP | Glide Ev (deg C) | Q | COP | Discharge Temperature (deg C) |
|---|---|---|---|---|---|
| R410A | 2088 | 0.1 | 100% | 100% | 76 |
| R32 | 675 | 0.0 | 109% | 102% | 93 |
| R1234ze | 6 | 0.0 | 34% | 108% | 57 |
| R600a | 4 | 0.0 | 24% | 111% | 55 |
| R32/R1234ze (0.68/0.32) | 461 | 4.4 | 89% | 103% | 86 |
| R32/R1234ze/R600a (0.68/0.27/0.05) | 461 | 4.0 | 90% | 102% | 84 |

As illustrated, adding isobutane (R600a) to the binary mixture of R32 and R1234ze reduces the glide which leads to improvement in capacity. This result is unexpected since isobutane has a lower capacity than R1234ze under similar conditions. The addition of isobutane also reduces the discharge temperature.

Without intending to be bound by theory, it is believed that this reduction in glide, improved capacity and discharge temperature observed with the low level addition of isobutane to R32 and R1234ze is due, at least in part, to the formation of an azeotrope or azeotrope-like between isobutane and R1234ze.

### B. Heating Mode

For the same system working in heating, the condenser temperature is set to 40.0°C, which generally corresponds to an indoor temperature of about 21.1°C. The degree of sub-cooling at the expansion device inlet is set to 5.5°C. The evaporating temperature is set to 2.0°C, which corresponds to an outdoor ambient temperature of about 8.3°C. The degree of superheat at evaporator outlet is set to 5.55°C. Compressor isentropic efficiency is set to 70%, and the volumetric efficiency is set to 100%. The pressure drop and heat transfer in the connecting lines (suction and liquid lines) are considered negligible, and heat leakage through the compressor shell is ignored. Several operating parameters are determined for the compositions identified above in accordance with the present invention, and these operating parameters are reported below, based upon R410A having a COP value of 1.00 and a capacity value of 1.00.

**Table 7**

| Fluid | GWP | Glide Ev (deg C) | Q | COP | Discharge Temperature (deg C) |
|---|---|---|---|---|---|
| R410A | 2088 | 0.1 | 100% | 100% | 72 |
| R32 | 675 | 0.0 | 108% | 101% | 90 |
| R1234ze | 6 | 0.0 | 32% | 106% | 53 |
| R600a | 4 | 0.0 | 23% | 107% | 51 |
| R32/R1234ze (0.68/0.32) | 461 | 4.4 | 87% | 102% | 83 |
| R32/R1234ze/R600a (0.68/0.27/0.05) | 461 | 4.0 | 89% | 101% | 80 |

As illustrated in Table 7, and similar to the results of cooling mode, adding isobutane (R600a) to the binary mixture of R32 and R1234ze reduces the glide which leads to improvement in capacity with reduction in discharge temperature.

Again, without intending to be bound by theory, it is believed that this reduction in glide, and improved capacity and discharge temperature observed with the low level addition of isobutane to R32 and R1234ze is due to the formation of an azeotrope or azeotrope-like between isobutane and R1234ze.

### C. Extreme Operating Conditions

For the same system working in extreme ambient temperatures, the condenser temperature is set to 57.0°C, which generally corresponds to an outdoor ambient temperature of about 46.0°C. The degree of sub-cooling at the expansion device inlet is set to 5.5°C. The evaporating temperature is set to 7.0°C, which corresponds to an indoor temperature of about 20.0°C. The degree of superheat at evaporator outlet is set to 5.55°C. Compressor isentropic efficiency is set to 70%, and the volumetric efficiency is set to 100%. The pressure drop and heat transfer in the connecting lines (suction and liquid lines) are considered negligible, and heat leakage through the compressor shell is ignored. One of the important parameters in these conditions is the discharge temperature, which should lower than 115 deg C if the current compressor technologies are used.

**Table 8**

| Fluid | GWP | Discharge Temperature (deg C) |
|---|---|---|
| R410A | 2088 | 95 |
| R32 | 675 | 117 |
| R1234ze | 6 | 70 |
| R600a | 4 | 67 |
| R32/R1234ze (0.68/0.32) | 461 | 106 |
| R32/R1234ze/R600a (0.68/0.27/0.05) | 461 | 104 |

The results in Table 8 show clearly that blend containing isobutane maintains this parameter inside the acceptable range.

### EXAMPLE 3 - Performance in stationary refrigeration (commercial refrigeration) - medium temperature applications

The performance of some preferred compositions were evaluated against other refrigerant compositions at conditions typical of medium temperature refrigeration. This application covers the refrigeration of fresh food. The conditions at which the compositions were evaluated are shown in Table 9:

**Table 9**

| | |
|---|---|
| Evaporating Temperature | 20°F (-6.7°C) |
| Condensing Temperature | 110°F (43.3°C) |
| Evaporator Superheat | 10°F (5.5°C) |
| Condenser Subcooling | 9°F (5°C) |
| Compressor Displacement | 1.0 ft³/min (0.028 m³/min) |
| Compressor Isentropic Eff. | 65% |
| Compressor Return Temp | 45°F (7.2°C) |

Table 10 compares compositions of interest to the baseline refrigerant, R-410A, a 50/50 near- azeotropic blend of R-32 and R-125 in typical medium temperature application.

**Table 10**

| Name | Composition | Capacity Rel. to R-410A | Efficiency Rel. to R-410A | Capacity with Increased Displ. |
|---|---|---|---|---|
| HDR 89 | R32/R1234ze (68/27) | 89% | 104% | 99% |
| HDR 90 | R32/R1234ze/n-butane (68/27/5) | 90% | 104% | 101% |
| HDR99 | R32/R1234ze/isobutane (68/27/5) | 90% | 103% | 101% |

As can be seen, the compositions exceed the efficiency of the baseline refrigerant, R-410A and are within 10% of the capacity. In addition with a modest 12% increase in the displacement of the compressor, equivalent capacity is reached.

### EXAMPLE 4 - Performance in stationary refrigeration (commercial refrigeration) - low temperature applications:

The performance of some preferred compositions were evaluated against other refrigerant compositions at conditions typical of low temperature refrigeration. This application covers the refrigeration of frozen food. The conditions at which the compositions were evaluated are shown in Table 11:

**Table 11**

| | |
|---|---|
| Evaporating Temperature | -15°F (-26.1°C) |
| Condensing Temperature | 110°F (-43.3°C) |
| Evaporator Superheat | 10°F (5.5°C) |
| Condenser Subcooling | 9°F (5°C) |
| Compressor Displacement | 1.0 ft³/min (0.028 m³/min) |
| Compressor Isentropic Eff. | 65% |
| Compressor Return Temp | 30°F (-1.1°C) |

Table 12 compares compositions of interest to the baseline refrigerant, R-410A, a 50/50 near- azeotropic blend of R-32 and R-125 in typical medium temperature application.

**Table 12**

| Name | Composition | Capacity Rel. to R-410A | Efficiency Rel. to R-410A | Capacity with Increased Displ. |
|---|---|---|---|---|
| HDR89 | R32/R1234ze/n-butane (68/27/5) | 88% | 105% | 98% |
| HDR90 | R32/R1234ze/n-butane (68/27/5) | 89% | 105% | 100% |
| HDR99 | R32/R1234ze/isobutane (68/27/5) | 90% | 104% | 101% |

As can be seen, the compositions again exceed the efficiency of the baseline refrigerant, R-410A and are within 11% of the capacity. In addition with a modest 12% increase in the displacement of the compressor, equivalent capacity is reached at low temperature conditions.

### EXAMPLE 5 - Miscibility with common compressor lubricants:

One of the compositions of interest, HDR-90 (68% R-32 / 27% R-1234ze(E) / 5% n-butane) was experimentally evaluated to determine its miscibility with a lubricant supplied by Emerson's Copeland division termed "Ultra 22" POE lubricant that has a viscosity of 22 cSt at 40°C. It showed a marked improvement over pure R-32 which was immiscible over this range tested (-40°C to 70°C) except for small quantities of refrigerant (<5% refrigerant in oil between 12°C and 62°C). The 73% R-32 / 27% 1234ze(E) blend was miscible between -5°C to 65°C but HDR-90 showed miscibility down to -26°C and up to 76°C for all concentrations and it showed miscibility down to -40°C for 5% refrigerant in oil. This improved miscibility at low temperature is especially important for heat pump and refrigeration applications.

### EXAMPLE 6 - Fractionation (composition change) from refrigerant leakage

In order to access the safety of a refrigerant blend, it desired to be either non-flammable or maintain ASHRAE class 2L (heat of combustion less than 19,000 kJ/kg and burning velocity less than 10 cm/sec). It is surprising that the addition of butane or isobutane do not cause the material to significantly enrich either the liquid or vapor phase with a composition that changes the material to a more flammable classification class (butane and iso-butane are both class 3 flammable materials (heat of combustion greater than 19,000 kJ/kg).

**Table 13**

| Refrigerant | Normal Boiling Point at 1 atm | ASHRAE Flammability Classification (ASHRAE Standard 34-2010) | Burning Velocity (cm/sec) |
|---|---|---|---|
| R-32 | -51.6 °C | 2L | 6.7 |
| R1234ze | -19.0 °C | 2L | ∼0 |
| isobutane | -11.7 °C | 3 | 45 |
| n-butane | -0.5 °C | 3 | 40 |

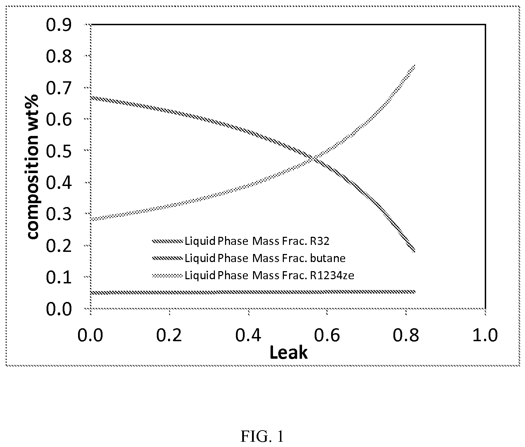

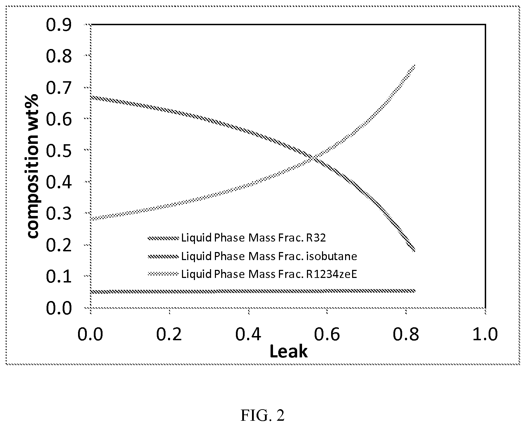

Figure 1 and Figure 2 show that as a vapor phase leak progresses with the blend of R32/R1234ze/Butane or R32/R1234ze/Isobutane the concentration of the hydrocarbon remains the same while R32 is depleted and the concentration of R1234ze is enriched. This is both important and unexpected because as the leak progresses, the liquid phase does not grow in butane or isobutane concentration which also manages the flammability as R1234ze does not exhibit flame limits at room temperature and the worst case flammability can be defined as the initial blended composition.

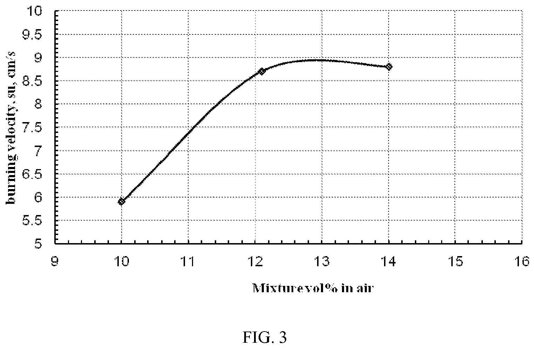

To be an ASHRAE 2L defined refrigerant and characterized as having mild flammability the burning velocity must be maintained below 10 cm/sec. Even though the butane and isobutane have boiling points much higher than both R32 and R1234ze, the liquid phase is not enriched as a vapor phase leak progresses which one would not expect based on normal fluid mixing. The burning velocity has been determine for the worst case fractionated composition is 8.8 cm/sec as seen in Figure 3.

## Claims

1. A heat transfer composition comprising:
(a) from about 60% to about 70% by weight of HFC-32;
(b) from about 20% to less than about 40% by weight of HFO-1234ze; and
(c) from greater than about 0% to about 10% by weight of a compound selected from the group consisting of n-butane, isobutane and combinations thereof,
provided that the amount of component (c) is effective to improve one or more of the composition's glide; heating capacity, cooling capacity, heating efficiency, cooling efficiency; and/or discharge temperature, as compared to compositions lacking component (c).

2. The heat transfer composition of claim 1, wherein (a) is provided in an amount of from about 63% to about 69% by weight; component (b) is provided in an amount of from about 25% to less than about 37% by weight; and component (c) is provided in an amount of from greater than about 0% to about 6% by weight.

3. The heat transfer composition of claims 1 to 2, wherein the HFO-1234ze is trans-HFO-1234ze.

4. The heat transfer composition of claims 1 to 3, wherein said component (c) comprises from about 1% to about 6% by weight of n-butane.

5. The heat transfer composition of claims 1 to 3, wherein said component (c) comprises from about 2% to about 6% by weight of n-butane.

6. The heat transfer composition of claims 1 to 3, wherein said component (c) comprises from about 3% to about 6% by weight of n-butane.

7. The heat transfer composition of claims 1 to 3, wherein said component (c) comprises from about 1% to about 6% by weight of isobutane.

8. The heat transfer composition of claims 1 to 3, wherein said component (c) comprises from about 2% to about 6% by weight of isobutane.

9. The heat transfer composition of claims 1 to 3, wherein said component (c) comprises from about 3% to about 6% by weight of isobutane.

10. A method of transferring heat to or from a fluid or body comprising causing a phase change in a composition of any of claims 1-9, and exchanging heat with said fluid or body during said phase change.

11. A refrigeration system comprising a composition in accordance with any of claims 1-9, said system being selected from the group consisting of automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, heat pump systems, and combinations of two or more of these.

## Patentansprüche

1. Wärmeübertragungszusammensetzung umfassend:
(a) etwa 60 bis etwa 70 Gew.-% HFC-32;
(b) etwa 20 bis weniger als etwa 40 Gew.-% HFO-1234ze; und
(c) mehr als etwa 0 bis etwa 10 Gew.-% einer Verbindung ausgewählt aus der Gruppe bestehend aus n-Butan, Isobutan und Kombinationen davon,
vorausgesetzt, dass die Menge der Komponente (c) wirksam ist, eine/eines oder mehr der Gleitfähigkeit, Erhitzungsfähigkeit, Kühlfähigkeit, Wärmeleistung, Kühlleistung der Zusammensetzung, und/oder der Austrittstemperatur im Vergleich mit Zusammensetzungen, denen die Komponente (c) fehlt, zu verbessern.

2. Wärmeübertragungszusammensetzung nach Anspruch 1, wobei (a) in einer Menge von etwa 63 bis etwa 69 Gew.-% bereitgestellt wird; die Komponente (b) in einer Menge von etwa 25 bis weniger als etwa 37 Gew.-% bereitgestellt wird; und die Komponente (c) in einer Menge von mehr als etwa 0 bis etwa 6 Gew.-% bereitgestellt wird.

3. Wärmeübertragungszusammensetzung nach den Ansprüchen 1 bis 2, wobei das HFO-1234ze trans-HFO-1234ze ist.

4. Wärmeübertragungszusammensetzung nach den Ansprüchen 1 bis 3, wobei die Komponente (c) etwa 1 bis etwa 6 Gew.-% n-Butan umfasst.

5. Wärmeübertragungszusammensetzung nach den Ansprüchen 1 bis 3, wobei die Komponente (c) etwa 2 bis etwa 6 Gew.-% n-Butan umfasst.

6. Wärmeübertragungszusammensetzung nach den Ansprüchen 1 bis 3, wobei die Komponente (c) etwa 3 bis etwa 6 Gew.-% n-Butan umfasst.

7. Wärmeübertragungszusammensetzung nach den Ansprüchen 1 bis 3, wobei die Komponente (c) etwa 1 bis etwa 6 Gew.-% Isobutan umfasst.

8. Wärmeübertragungszusammensetzung nach den Ansprüchen 1 bis 3, wobei die Komponente (c) etwa 2 bis etwa 6 Gew.-% Isobutan umfasst.

9. Wärmeübertragungszusammensetzung nach den Ansprüchen 1 bis 3, wobei die Komponente (c) etwa 3 bis etwa 6 Gew.-% Isobutan umfasst.

10. Verfahren für die Wärmeübertragung zu oder von einem Fluid oder Körper, umfassend das Verursachen einer Phasenänderung in einer Zusammensetzung nach einem der Ansprüche 1-9, und das Austauschen von Wärme mit dem Fluid oder Körper während der Phasenänderung.

11. Kühlsystem umfassend eine Zusammensetzung nach einem der Ansprüche 1-9, wobei das System aus der Gruppe ausgewählt wird bestehend aus Fahrzeugklimatisierungssystemen, Klimatisierungssystemen für den Wohnbereich, Klimatisierungssystemen für den Handelsbereich, Kühlsysteme für Wohngebäude, Tiefkühlsysteme für Wohngebäude, Kühlsysteme für den Handelsbereich, Tiefkühlsysteme für den Handelsbereich, Kaltluftklimatisiersysteme, Kaltluftkühlsysteme, Wärmepumpensysteme und Kombinationen von zwei oder mehr dieser.

## Revendications

1. Composition caloporteuse comprenant :
(a) d'environ 60 % à environ 70 % en poids de HFC-32 ;
(b) d'environ 20 % à moins d'environ 40 % en poids de HFO-1234ze ; et
(c) de plus d'environ 0 % à environ 10 % en poids d'un composé choisi dans le groupe constitué par le n-butane, l'isobutane et les associations de ceux-ci,
à condition que la quantité de composant (c) soit efficace pour améliorer une ou plusieurs propriétés parmi la glisse de la composition ; la capacité de chauffage, la capacité de refroidissement, le rendement de chauffage, le rendement de refroidissement ; et/ou la température de refoulement, par comparaison avec des compositions dépourvues de composant (c).

2. Composition caloporteuse selon la revendication 1, dans laquelle (a) est fourni en une quantité d'environ 63 % à environ 69 % en poids ; le composant (b) est fourni en une quantité d'environ 25 % à moins d'environ 37 % en poids ; et le composant (c) est fourni en une quantité de plus d'environ 0 % à environ 6 % en poids.

3. Composition caloporteuse selon les revendications 1 à 2, dans laquelle le HFO-1234ze est le trans-HFO-1234ze.

4. Composition caloporteuse selon les revendications 1 à 3, dans laquelle ledit composant (c) comprend d'environ 1 % à environ 6 % en poids de n-butane.

5. Composition caloporteuse selon les revendications 1 à 3, dans laquelle ledit composant (c) comprend d'environ 2 % à environ 6 % en poids de n-butane.

6. Composition caloporteuse selon les revendications 1 à 3, dans laquelle ledit composant (c) comprend d'environ 3 % à environ 6 % en poids de *n*-butane.

7. Composition caloporteuse selon les revendications 1 à 3, dans laquelle ledit composant (c) comprend d'environ 1 % à environ 6 % en poids d'isobutane.

8. Composition caloporteuse selon les revendications 1 à 3, dans laquelle ledit composant (c) comprend d'environ 2 % à environ 6 % en poids d'isobutane.

9. Composition caloporteuse selon les revendications 1 à 3, dans laquelle ledit composant (c) comprend d'environ 3 % à environ 6 % en poids d'isobutane.

10. Procédé de transfert de chaleur vers un fluide ou corps ou à partir d'un fluide ou corps consistant à provoquer un changement de phase dans une composition selon l'une quelconque des revendications 1-9 et échanger de la chaleur avec ledit fluide ou corps pendant ledit changement de phase.

11. Système frigorifique comprenant une composition selon l'une quelconque des revendications 1-9, ledit système étant choisi dans le groupe constitué par les systèmes de climatisation d'automobile, les systèmes de climatisation d'habitations, les systèmes de climatisation de locaux commerciaux, les systèmes de réfrigérateurs domestiques, les systèmes de congélateurs domestiques, les systèmes de réfrigérateurs à usage commercial, les systèmes de congélateurs à usage commercial, les systèmes de climatisation de refroidisseurs, les systèmes frigorifiques de refroidisseurs, les systèmes de pompes à chaleur et les combinaisons de deux ou plus de deux de ceux-ci.
